# EUROPEAN PATENT SPECIFICATION

(11) **EP 3 144 510 B1**
(45) Date of publication and mention of the grant of the patent: **05.02.2020**
(21) Application number: 15197480.5
(22) Date of filing: 02.12.2015
(51) Int. Cl.: F02D 41/00, B60W 20/00, F02B 41/00, F02B 65/00, F02B 75/40, F02N 11/04

(54) **SYSTEM AND METHOD FOR MOTOR-ASSISTED NON-UNIFORM DISPLACEMENT ENGINE CONTROL**
SYSTEM UND VERFAHREN FÜR MOTORGESTÜTZTE MOTORSTEUERUNG MIT UNGLEICHMÄSSIGER VERLAGERUNG
SYSTÈME ET PROCÉDÉ DE COMMANDE DE MOTEUR DE DÉPLACEMENT NON UNIFORME ASSISTÉ PAR UN MOTEUR

(30) Priority: 17.09.2015 KR 20150131356
(43) Date of publication of application: 22.03.2017
(73) Proprietor: Hyundai Motor Company, Seoul 06797 (KR)
(72) Inventor: EO, Jeong Soo, 18429 Hwaseong-si, Gyeonggi-do (KR); KIM, Sung Jae, 16699 Suwon-si, Gyeonggi-do (KR); HYUN, Ba Ro, 13615 Seongnam-si, Gyeonggi-do (KR)
(74) Representative: Viering, Jentschura & Partner mbB Patent- und Rechtsanwälte

(56) References cited:
- US-A- 5 722 359
- US-A1- 2007 131 183
- US-A1- 2013 276 755
- US-A1- 2015 203 105

## Description

### TECHNICAL FIELD

The present disclosure relates to system and a method for a motor-assisted non-uniform displacement engine control. More particularly, it relates to a system and method for controlling an engine and a motor in a vehicle having an engine including cylinders having different displacements and a motor for supplementing a driving force of the engine. A non-uniform displacement engine is known for example from the document US 2007/131183 A1.

### BACKGROUND

A conventional internal combustion engine is generally configured such that cylinders have uniform displacements in order to satisfy the distribution characteristics of intake and exhaust systems. The uniform displacement engine has an advantage in that it is possible to easily control an air-to-fuel ratio and exhaust gas. However, the uniform displacement engine has a disadvantage in that a margin for operation point control is insufficient due to the fixed displacement thereof. As a result, it is difficult to satisfy both operation efficiency and fuel efficiency at a specific operation zone, and therefore problems must be addressed by compromising both operation efficiency and fuel efficiency.

In addition, in the engine having fixed displacement cylinders, excessive mechanical energy is consumed in order to secure stable idling, which is inefficient. In particular, operation point control is inevitably and frequently inefficient due to limitations caused by vibration and noise.

Such problems, which frequently occur over the entire operation zone of the conventional internal combustion engine, are solved by compromising between operation efficiency, fuel efficiency, and exhaust properties.

The above information disclosed in this Background section is only for enhancement of understanding of the background of the disclosure and therefore it may contain information that does not form the prior art that is already known in this country to a person of ordinary skill in the art.

### SUMMARY OF THE DISCLOSURE

The present disclosure has been made in an effort to solve the above-described problems associated with prior art. In one aspect, the present disclosure provides a motor-assisted non-uniform displacement engine control system according to claim 1.

In a preferred embodiment, the non-uniform displacement engine may include two sets of cylinders, each set of cylinders comprising two cylinders having the same displacement.

In another preferred embodiment, the non-uniform displacement engine may be configured such that first and fourth cylinders have higher displacement than second and third cylinders, and each set of cylinders alternately performs an explosion stroke.

In still another preferred embodiment, the non-uniform displacement engine may include two kinds of cylinders having different displacements, and the motor control unit may include a mode for controlling the motor such that regenerative braking is achieved in explosion strokes of high displacement cylinders and controlling the motor such that power assistance is achieved by motor torque in explosion strokes of low displacement cylinders in order that the sum of engine torque and motor torque in the explosion stroke of each cylinder is uniform.

In yet another preferred embodiment, the non-uniform displacement engine may include two kinds of cylinders having different displacements, and the motor control unit may include a mode for controlling the motor such that the motor is not driven in explosion strokes of high displacement cylinders and controlling the motor such that power assistance is achieved by motor torque in explosion strokes of low displacement cylinders in order that the sum of engine torque and motor torque in the explosion stroke of each cylinder is uniform.

In still yet another preferred embodiment, the non-uniform displacement engine may include two kinds of cylinders having different displacements, and the motor control unit may include a mode for controlling the motor such that regenerative braking is achieved in explosion strokes of high displacement cylinders and controlling the motor such that the motor is not driven in explosion strokes of low displacement cylinders in order that the sum of engine torque and motor torque in the explosion stroke of each cylinder is uniform.

In a further preferred embodiment, the non-uniform displacement engine may include two kinds of cylinders having different displacements, and the motor control unit may be configured to control the motor in at least three different control modes, the control modes including a first mode for controlling the motor such that regenerative braking is achieved in explosion strokes of high displacement cylinders and controlling the motor such that power assistance is achieved by motor torque in explosion strokes of low displacement cylinders, a second mode for controlling the motor such that the motor is not driven in the explosion strokes of the high displacement cylinders and controlling the motor such that power assistance is achieved by motor torque in the explosion strokes of the low displacement cylinders, and a third mode for controlling the motor such that regenerative braking is achieved in the explosion strokes of the high displacement cylinders and controlling the motor such that the motor is not driven in the explosion strokes of the low displacement cylinders.

In another aspect, the present disclosure provides a control method according to claim 8.

In a preferred embodiment, the non-uniform displacement engine may include two kinds of cylinders having different displacements, and step (b) may include a mode for controlling the motor such that regenerative braking is achieved in explosion strokes of high displacement cylinders and controlling the motor such that power assistance is achieved by motor torque in explosion strokes of low displacement cylinders in order that the sum of engine torque and motor torque in the explosion stroke of each cylinder is uniform.

In another preferred embodiment, the non-uniform displacement engine may include two kinds of cylinders having different displacements, and step (b) may include a mode for controlling the motor such that the motor is not driven in explosion strokes of high displacement cylinders and controlling the motor such that power assistance is achieved by motor torque in explosion strokes of low displacement cylinders in order that the sum of engine torque and motor torque in the explosion stroke of each cylinder is uniform.

In still another preferred embodiment, the non-uniform displacement engine may include two kinds of cylinders having different displacements, and step (b) may include a mode for controlling the motor such that regenerative braking is achieved in explosion strokes of high displacement cylinders and controlling the motor such that the motor is not driven in explosion strokes of low displacement cylinders in order that the sum of engine torque and motor torque in the explosion stroke of each cylinder is uniform.

In yet another preferred embodiment, the non-uniform displacement engine may include two kinds of cylinders having different displacements, and step (b) may include controlling the motor in any one selected from a group consisting of at least three different control modes, the control modes including a first mode for controlling the motor such that regenerative braking is achieved in explosion strokes of high displacement cylinders and controlling the motor such that power assistance is achieved by motor torque in explosion strokes of low displacement cylinders, a second mode for controlling the motor such that the motor is not driven in the explosion strokes of the high displacement cylinders and controlling the motor such that power assistance is achieved by motor torque in the explosion strokes of the low displacement cylinders, and a third mode for controlling the motor such that regenerative braking is achieved in the explosion strokes of the high displacement cylinders and controlling the motor such that the motor is not driven in the explosion strokes of the low displacement cylinders.

Other aspects and preferred embodiments of the disclosure are discussed infra.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The above and other features of the disclosure are discussed infra.

### BRIEF DESCRIPTION OF THE DRAWINGS

The above and other features of the present disclosure will now be described in detail with reference to certain exemplary embodiments thereof illustrated the accompanying drawings which are given hereinbelow by way of illustration only, and thus are not limitative of the present disclosure, and wherein:
FIG. 1 is a view schematically showing the construction of a motor-assisted non-uniform displacement engine control system according to the present disclosure;
FIG. 2 is a graph showing dynamic characteristics of a non-uniform displacement engine;
FIG. 3 is a view showing motor torque control that assists torque output from the non-uniform displacement engine;
FIGS. 4A to 4D are graphs showing a control method of a motor-assisted non-uniform displacement engine control system according to a preferred embodiment of the present disclosure; and
FIGS. 5A and 5B are graphs respectively showing normal control and compensation control modes of the non-uniform displacement engine control system in a frequency domain.

It should be understood that the appended drawings are not necessarily to scale, presenting a somewhat simplified representation of various preferred features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter reference will now be made in detail to various embodiments of the present disclosure, examples of which are illustrated in the accompanying drawings and described below. While the disclosure will be described in conjunction with exemplary embodiments, it will be understood that present description is not intended to limit the disclosure to those exemplary embodiments. On the contrary, the disclosure is intended to cover not only the exemplary embodiments, but also various alternatives, modifications, equivalents and other embodiments, which may be included within the spirit and scope of the disclosure as defined by the appended claims.

The present disclosure proposes a new-concept non-uniform displacement engine control system that performs control using a motor in a system including a non-uniform displacement engine including cylinders having different displacements, thereby achieving different displacements based on driving conditions, and a method for the same. In particular, the present disclosure has another characteristic in that a system depending upon the conventional inefficient use of mechanical energy is configured to utilize electrical energy, which is more efficient, thereby improving overall system efficiency.

The present disclosure is configured such that high displacement cylinders and low displacement cylinders are arranged to execute a high displacement mode and a low displacement mode based on driving conditions, thereby improving fuel efficiency and power performance utilizing the increase in potential energy and kinetic energy of high displacement. In addition, the proportion of a vibration/noise generation area that can be controlled by the motor is increased, thereby achieving more advantageous driving benefits.

In a preferred embodiment of the present disclosure, the non-uniform displacement engine is configured to have a four cylinder structure including two cylinders of one kind (or size) having the same displacement as each other and two cylinders of the other kind (or size) having the same displacement as each other. However, the present disclosure is not limited thereto, and it should be noted that extension and modification is possible so long as the technical spirit of the present disclosure is not changed.

Hereinafter, a motor-assisted non-uniform displacement engine control system according to a preferred embodiment of the present disclosure and a method for the controlling a motor-assisted non-uniform displacement engine control system according to a preferred embodiment of the present disclosure will be described in detail with reference to the accompanying drawings.

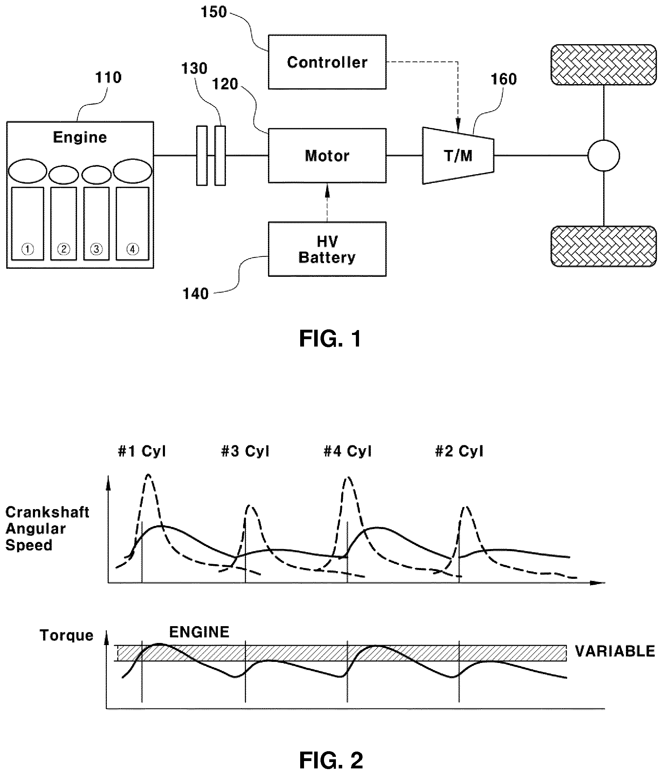

FIG. 1 is a view schematically showing the construction of a motor-assisted non-uniform displacement engine control system according to the present disclosure.

As shown in FIG. 1, the system includes an engine and a motor as driving sources that provide driving torque necessary to propel a vehicle.

Driving shafts of the engine and the motor are connected to each other via a power switching unit, such as a clutch. The connection between the engine and the motor by the power switching unit is just an example. Thus, in another preferred embodiment, the engine and the motor may be directly connected with each other. In addition, the system includes an energy storage device for supplying electrical energy to the motor, such as a battery, and a motor control unit for controlling the operation of the motor. In addition, although not shown, the system includes an engine control unit for controlling the engine. The engine control unit and the motor control unit may be controlled by a higher-level controller. In addition, the engine control unit and the motor control unit may be integrated into a single controller.

Also, driving torque from the engine and the motor may be transmitted to driving wheels via a transmission.

Meanwhile, as shown in FIG. 1, the control system of the present disclosure is configured to include a non-uniform displacement engine including a plurality of at least two kinds or sizes of cylinders having different displacements.

The non-uniform displacement engine is characterized by different displacements for respective cylinders, and selects the merits and demerits of high displacement and low displacement based on a controllable strategy in order to improve fuel efficiency and power performance. In addition, according to the present disclosure, which is configured as a system assisted by the motor, it is possible to compensate for the characteristics of each cylinder utilizing the motor. Moreover, it is possible to improve driving efficiency and to optimize energy efficiency through energy recovery. In particular, unlike the related art in which excessive mechanical energy is used in order to ensure stable idling, it is possible to ensure stable idling utilizing the electrical energy of the motor. In addition, it is possible to mitigate vibration and noise utilizing the motor.

For example, as shown in FIG. 1, the non-uniform displacement engine may be configured to have a four cylinder structure including two cylinders of one kind or size having the same displacement and two cylinders of the other kind or size having the same displacement.

Non-uniform displacement may be set based on the characteristics of the system. The cylinders are symmetrically arranged in ignition (explosion) order such that a vibration component caused by the difference in displacement can be offset partially or entirely.

That is, in explosion order 1-3-4-2 or 1-2-4-3, cylinders located at corresponding positions, i.e. the first and fourth cylinders and the second and third cylinders may have the same displacement, and the other cylinder group may have different displacements.

For example, the first and fourth cylinders may have high displacement, and the second and third cylinders may have lower displacement than the first and fourth cylinders. This case is shown in FIG. 1.

According to this cylinder arrangement, it is possible to offset a vibration component based on the arrangement of the cylinders at corresponding positions, thereby improving vibration and noise characteristics.

In a case in which the engine is configured as a four-cylinder engine having a total displacement of 1.5L according to a first embodiment, the first and fourth cylinders may have a high displacement of 0.4L for each of the two cylinders, and the second and third cylinders may have a low displacement of 0.35L for each of the two cylinders.

According to the first embodiment, the four-cylinder engine may be ignited in order 1-3-4-2, and cylinders having different displacements may be arranged so as to correspond to the opposite cylinders in the ignition order, in order to offset a vibration component which may be caused due to non-uniform displacement.

Meanwhile, FIG. 2 is a graph showing dynamic characteristics of the non-uniform displacement engine according to the first embodiment.

As shown in FIG. 2, the first and fourth cylinders, which are high displacement cylinders, have higher torque and crankshaft angular speed, which are generated as a result of explosions, than the second and third cylinders. That is, referring to the crankshaft angular speed and the engine torque in the explosion (or power) stroke of each cylinder, the high displacement cylinders have higher crankshaft angular speeds and engine torques than the lower displacement cylinders.

The explosion stroke of each cylinder means a period set based on the same criterion, such as crank angles before and after the explosion of each cylinder or the distance from a top dead center (TDC) to the upper end of a piston that is set.

The difference in displacement among the cylinders causes non-uniform driving of the engine, resulting in vibration and noise.

Meanwhile, the preferred embodiment of the present disclosure includes motor control for compensating for non-uniform engine driving characteristics.

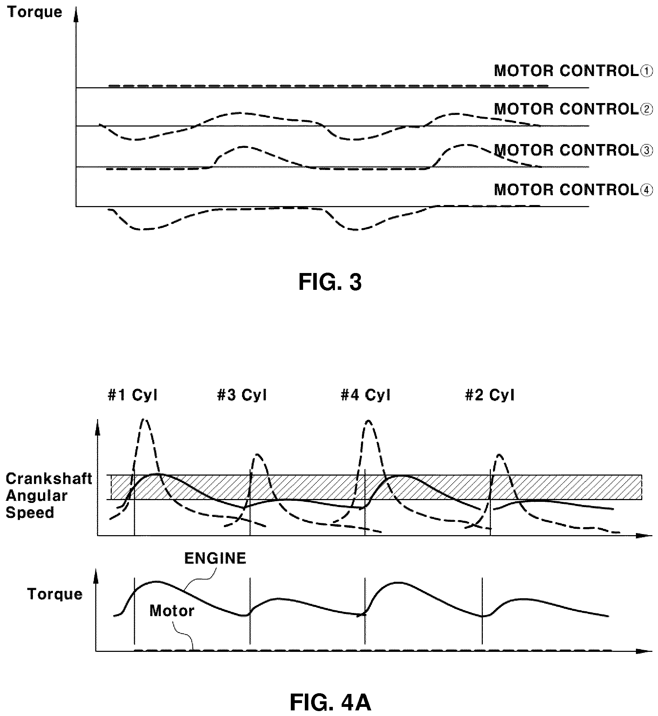

FIG. 3 shows examples of such motor control. Specifically, FIG. 3 shows examples of motor torque control assisting torque output from the non-uniform displacement engine. In addition, FIGS. 4A to 4D respectively show motor control methods according to motor control modes ① to ④ shown in FIG. 3.

FIG. 3 shows motor control modes ① to ④. In motor control mode ①, the motor is not driven, or the motor is controlled to generate uniform driving torque. In motor control modes ② to ④, the motor is controlled differently in respective explosion strokes of the non-uniform displacement engine.

Particularly, in motor control mode ①, as shown in FIG. 4A, the motor is not driven, or the motor is controlled to generate uniform driving torque. Since pulsation components of the high displacement cylinders and the lower displacement cylinders are utilized, unique driving characteristics of the non-uniform displacement engine remain unchanged (the crankshaft angular speed is not changed).

Consequently, it is possible to improve driving efficiency and fuel efficiency at a high efficiency point utilizing increments in kinetic energy of the high displacement cylinders and to improve responsiveness in a transition state and power performance utilizing the increase in potential energy.

Meanwhile, in motor control modes ② to ④, the motor is controlled differently in respective explosion strokes of the non-uniform displacement engine. In motor control mode ②, power assistance and regenerative braking are proportionally controlled in order to minimize a vibration component. Motor control mode ③ is used for traveling at the maximum power, and motor control mode ④ is used for traveling at the minimum power.

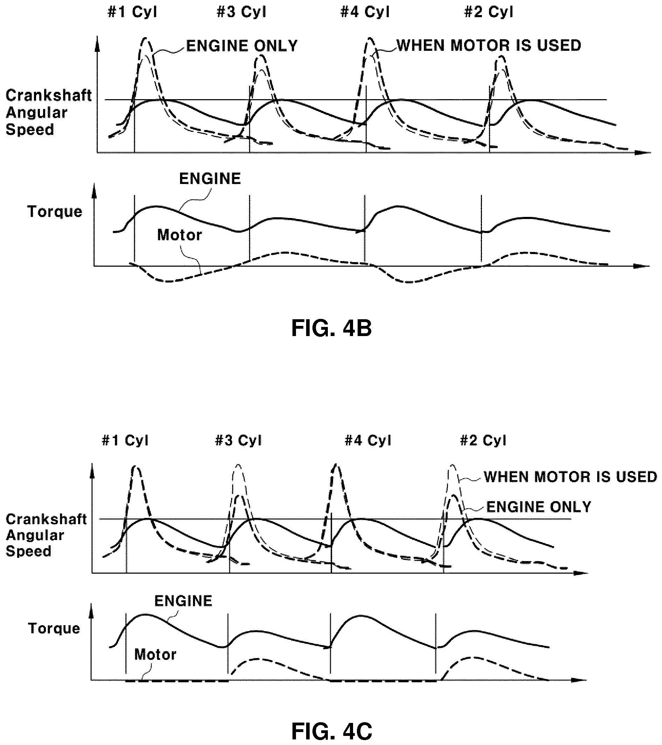

That is, in motor control modes ② to ④, the motor is selectively controlled by the motor control unit. The motor control may be performed in order to compensate for the difference in torque due to the different displacements of the cylinders. In the explosion stroke of each cylinder, therefore, the motor may be controlled such that the sum of the engine torque and the motor torque is uniform using driving or regenerative braking of the motor. Motor control modes ② to ④ are respectively shown in FIGS. 4B to 4D. In each torque graph, the solid line indicates engine torque, and the dotted line indicates motor torque. In addition, it can be seen from a comparison with FIG. 4A that it is possible to obtain uniform crankshaft angular speed through power assistance or regenerative braking by the motor.

Specifically, in motor control mode ②, a target displacement is set, and a driving torque of the engine and the motor is set based on the target displacement, such that the motor has uniform output characteristics in all explosion strokes. As shown in FIG. 4B, the motor is controlled such that negative torque is generated through regenerative braking of the motor in the explosion strokes of the high displacement cylinders, and the motor is controlled such that positive torque is generated by the motor to achieve power assistance in the explosion strokes of the low displacement cylinders. The motor is controlled to have uniform output characteristics in the respective explosion strokes, and thus it is possible to minimize a vibration component of the non-uniform displacement engine.

Motor control mode ③ is used for traveling at the maximum power of the non-uniform displacement engine. The motor is controlled such that the low displacement cylinders are assisted by the motor to achieve the maximum power of the given non-uniform displacement. In motor control mode ③, the motor may be controlled such that the same power performance as in the explosion strokes of the high displacement cylinders is achieved in the explosion strokes of the low displacement cylinders through power assistance by the motor. As shown in FIG. 4C, therefore, the motor is controlled such that power assistance by the motor is not achieved in the explosion strokes of the high displacement cylinders and such that traveling is performed at the maximum power as in the explosion strokes of the high displacement cylinders through power assistance by the motor only in the explosion strokes of the low displacement cylinders.

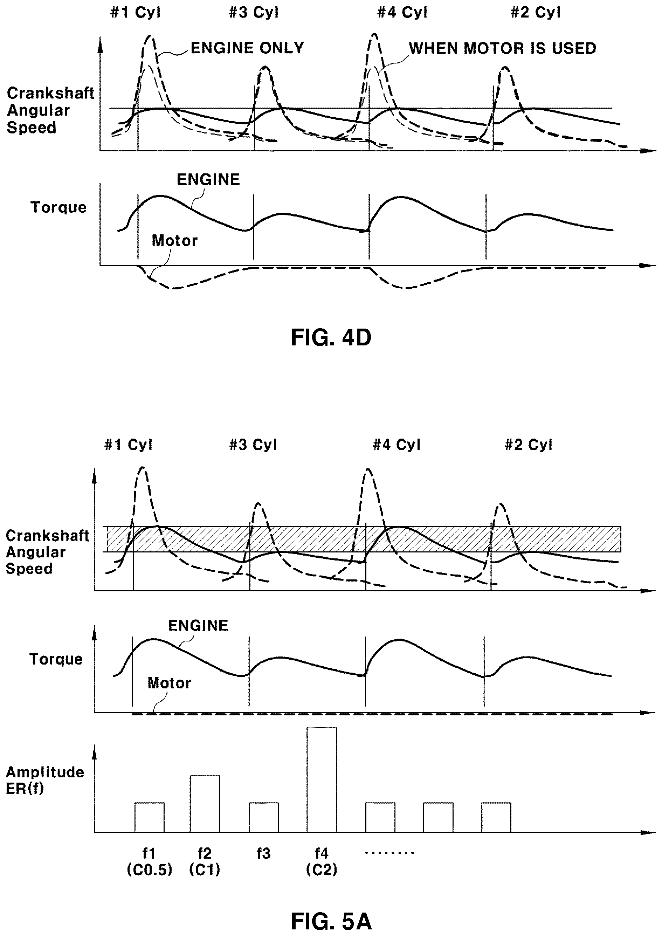

Meanwhile, motor control mode ④ is used for traveling at the minimum power of the non-uniform displacement engine. The motor is controlled such that the excessive energy from the high displacement cylinders is recovered by the motor to achieve the minimum power of the given non-uniform displacement. In motor control mode ④, as shown in FIG. 4D, the motor is controlled such that power assistance by the motor is not achieved in the explosion strokes of the low displacement cylinders and such that negative torque is generated by regenerative braking in the explosion strokes of the high displacement cylinders, reversely to motor control mode ③. Particularly, in motor control mode ④, the motor is controlled based on the minimum power of the low displacement cylinders. Consequently, the motor is operated at uniform minimum power based on the low displacement cylinders.

Motor control modes ① to ④ may be selectively used by the motor control unit. For example, the motor control unit may store motor control modes ② to ④, which are different from one another, and may select any one thereamong to control the motor.

In the preferred embodiment of the present disclosure, it is possible to variably configure substantial driving characteristics of the vehicle according to the utilization of the motor based on the high displacement and the low displacement of the non-uniform displacement engine. In particular, it is possible to elaborately perform variable displacement control within a set range of displacement through the use of the motor control modes.

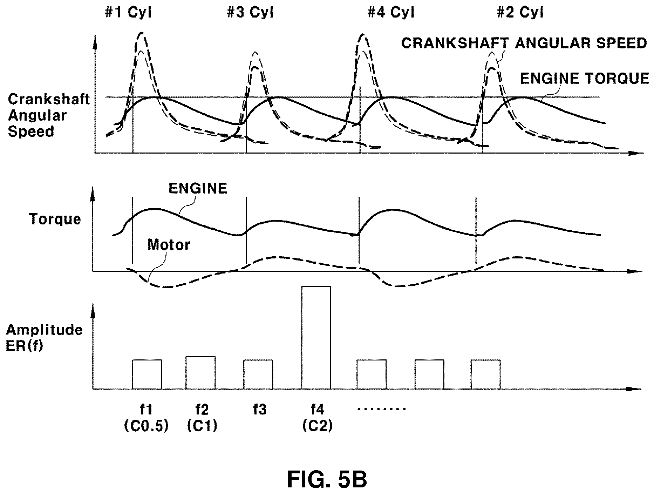

FIGS. 5A and 5B are graphs respectively showing normal control and compensation control modes of the non-uniform displacement engine control system in a frequency domain, especially showing improvement in the vibration characteristics. That is, in an example of FIG. 5A, a C1 component of the frequency domain is large, and, in an example of FIG. 5B, the C1 component of the frequency domain is greatly reduced through the use of control modes ② to ④, thereby greatly reducing vibration and noise.

As is apparent from the above description, the preferred embodiment of the present disclosure may be used as a variable displacement engine and a control system in a vehicle using an engine and a motor as a power source, as in a hybrid vehicle.

In addition, in the preferred embodiment of the present disclosure, modes based on traveling conditions may be selectively embodied. Consequently, it is possible to variously perform control in operation zones, such as the exhibition of power performance or the optimization of fuel efficiency, as described.

In addition, in the preferred embodiment of the present disclosure, it is possible to increase freedom in the control of the hybrid vehicle, thereby proposing a new paradigm to control the driving of the hybrid vehicle.

In particular, according to the present disclosure, it is possible to configure a driving system such that variable displacement control is elaborately or variously performed through the use of the motor within a set variable range.

In addition, it is possible to entirely or partially solve vibration and noise problems caused by the non-uniform displacement engine, thereby improving travelling efficiency.

The disclosure has been described in detail with reference to preferred embodiments thereof. However, it will be appreciated by those skilled in the art that changes may be made in these embodiments without departing from the scope which is defined in the appended claims.

## Claims

1. A motor-assisted non-uniform displacement engine control system comprising:
a non-uniform displacement engine comprising a plurality of cylinders, the cylinders comprising at least two kinds of cylinders having different displacements;
a motor connected to a driving shaft of the engine;
an energy storage device for supplying electrical energy to the motor; and
a motor control unit for controlling the motor, wherein
the motor control unit controls the motor to compensate for a difference in torque due to different displacements of the cylinders such that a sum of engine torque and motor torque during an explosion stroke of each cylinder is uniform, and
the motor control unit has at least two control modes, the respective control modes are configured to have different total driving torque by adjusting a motor assist torque and a motor regenerative torque in accordance with the engine torque such that the driving torque is varied by changing the control mode.

2. The system of claim 1, wherein the non-uniform displacement engine comprises two sets of cylinders, each set of cylinders comprising two cylinders having the same displacement.

3. The system of claim 1 or 2, wherein the non-uniform displacement engine includes a first and a fourth cylinder having a higher displacement than a second and a third cylinder, and each set of cylinders alternately performs an explosion stroke.

4. The system of claim 1, wherein the non-uniform displacement engine comprises two kinds of cylinders having different displacements, and
the at least two control modes comprise a mode for controlling the motor such that regenerative braking is achieved during explosion strokes of high displacement cylinders and controlling the motor such that power assistance is achieved by motor torque in explosion strokes of low displacement cylinders in order that the sum of engine torque and motor torque during the explosion stroke of each cylinder is uniform.

5. The system of claim 1, wherein
the non-uniform displacement engine comprises two kinds of cylinders having different displacements, and
the at least two control modes comprise a mode for controlling the motor such that the motor is not driven during explosion strokes of high displacement cylinders and controlling the motor such that power assistance is achieved by motor torque in explosion strokes of low displacement cylinders in order that the sum of engine torque and motor torque during the explosion stroke of each cylinder is uniform.

6. The system of claim 1, wherein the non-uniform displacement engine comprises two kinds of cylinders having different displacements, and
the at least two control modes comprise a mode for controlling the motor such that regenerative braking is achieved during explosion strokes of high displacement cylinders and controlling the motor such that the motor is not driven during explosion strokes of low displacement cylinders in order that the sum of engine torque and motor torque in the explosion stroke of each cylinder is uniform.

7. The system of claim 1, wherein the non-uniform displacement engine comprises two kinds of cylinders having different displacements, and
the motor control unit controls the motor selectively in at least three different control modes, the control modes comprising:
a first mode for controlling the motor such that regenerative braking is achieved during explosion strokes of high displacement cylinders and controlling the motor such that power assistance is achieved by motor torque during explosion strokes of low displacement cylinders;
a second mode for controlling the motor such that the motor is not driven during the explosion strokes of the high displacement cylinders and controlling the motor such that power assistance is achieved by motor torque during the explosion strokes of the low displacement cylinders; and
a third mode for controlling the motor such that regenerative braking is achieved during the explosion strokes of the high displacement cylinders and controlling the motor such that the motor is not driven during the explosion strokes of the low displacement cylinders.

8. A control method of a system comprising a non-uniform displacement engine comprising a plurality of cylinders, the cylinders comprising at least two kinds of cylinders having different displacements, and a motor connected to a driving shaft of the engine, the method comprising:
(a) driving the non-uniform displacement engine;
(b) setting motor torque based on engine torque; and
(c) controlling the motor based on the set motor torque, wherein
step (b) comprises compensating for a difference in torque due to the cylinders having different displacements to control the motor such that a sum of engine torque and motor torque during an explosion stroke of each cylinder is uniform, and
wherein the motor is controlled by a motor control unit which has at least two control modes, and the motor torque is determined by the control modes; and
the respective control modes are configured to have different total driving torque by adjusting a motor assist torque and a motor regenerative torque in accordance with the engine torque such that the driving torque is varied by changing the control mode.

9. The method of claim 8, wherein the non-uniform displacement engine comprises two kinds of cylinders having different displacements, and
the at least two control modes comprise a mode for controlling the motor such that regenerative braking is achieved during explosion strokes of high displacement cylinders and controlling the motor such that power assistance is achieved by motor torque in explosion strokes of low displacement cylinders in order that the sum of engine torque and motor torque during the explosion stroke of each cylinder is uniform.

10. The method of claim 8, wherein the non-uniform displacement engine comprises two kinds of cylinders having different displacements, and
the at least two control modes comprise a mode for controlling the motor such that the motor is not driven during explosion strokes of high displacement cylinders and controlling the motor such that power assistance is achieved by motor torque during explosion strokes of low displacement cylinders in order that the sum of engine torque and motor torque during the explosion stroke of each cylinder is uniform.

11. The method of claim 8, wherein the non-uniform displacement engine comprises two kinds of cylinders having different displacements, and
the at least two control modes comprise a mode for controlling the motor such that regenerative braking is achieved during explosion strokes of high displacement cylinders and controlling the motor such that the motor is not driven during explosion strokes of low displacement cylinders in order that the sum of engine torque and motor torque during the explosion stroke of each cylinder is uniform.

12. The method of claim 8, wherein the non-uniform displacement engine comprises two kinds of cylinders having different displacements, and
step (b) comprises controlling the motor according to any one selected from a group consisting of at least three different control modes, the control modes comprising:
a first mode for controlling the motor such that regenerative braking is achieved during explosion strokes of high displacement cylinders and controlling the motor such that power assistance is achieved by motor torque during explosion strokes of low displacement cylinders;
a second mode for controlling the motor such that the motor is not driven during the explosion strokes of the high displacement cylinders and controlling the motor such that power assistance is achieved by motor torque during the explosion strokes of the low displacement cylinders; and
a third mode for controlling the motor such that regenerative braking is achieved during the explosion strokes of the high displacement cylinders and controlling the motor such that the motor is not driven during the explosion strokes of the low displacement cylinders.

## Patentansprüche

1. Ein motorgestütztes ungleichmäßiger-Hubraum-Verbrennungsmotor-Steuersystem, aufweisend:
einen ungleichmäßiger-Hubraum-Verbrennungsmotor, der eine Mehrzahl von Zylindern aufweist, wobei die Zylinder mindestens zwei Arten von Zylindern, die unterschiedliche Hubräume haben, aufweisen,
einen Elektromotor, der mit einer Antriebswelle des Verbrennungsmotors verbunden ist,
eine Energiespeichervorrichtung zum Versorgen des Elektromotors mit elektrischer Energie, und
eine Elektromotorsteuereinheit zum Steuern des Elektromotors, wobei
die Elektromotorsteuereinheit den Elektromotor steuert, um eine Drehmomentdifferenz aufgrund unterschiedlicher Hubräume der Zylinder zu kompensieren, so dass eine Summe aus Verbrennungsmotordrehmoment und Elektromotordrehmoment während eines Explosionshubs jedes Zylinders einheitlich ist, und
die Elektromotorsteuereinrichtung mindestens zwei Steuermodi aufweist, wobei die jeweiligen Steuermodi konfiguriert sind, um ein unterschiedliches Gesamtantriebsdrehmoment zu haben, durch Anpassen eines Elektromotor-Unterstützungsdrehmoments und eines Elektromotor-Rückgewinnungsdrehmoments gemäß dem Verbrennungsmotordrehmoment, so dass das Antriebsdrehmoment durch Ändern des Steuermodus variiert wird.

2. Das System gemäß Anspruch 1, wobei der ungleichmäßiger-Hubraum-Verbrennungsmotor zwei Sätze von Zylindern aufweist, wobei jeder Satz von Zylindern zwei Zylinder mit gleichem Hubraum aufweist.

3. Das System gemäß Anspruch 1 oder 2, wobei der ungleichmäßiger-Hubraum-Verbrennungsmotor einen ersten und einen vierten Zylinder mit einem größeren Hubraum als ein zweiter und ein dritter Zylinder aufweist, und jeder Satz von Zylindern abwechselnd einen Explosionshub ausführt.

4. Das System gemäß Anspruch 1, wobei der ungleichmäßiger-Hubraum-Verbrennungsmotor zwei Arten von Zylindern mit unterschiedlichen Hubräumen aufweist, und
die mindestens zwei Steuermodi aufweisen: einen Modus zum Steuern des Elektromotors, so dass ein Rückgewinnungsbremsen während Explosionshüben von Zylindern mit großem Hubraum erreicht wird, und zum Steuern des Elektromotors, so dass eine Leistungsunterstützung mittels Elektromotordrehmoment bei Explosionshüben von Zylindern mit kleinem Hubraum erreicht wird, so dass die Summe aus Verbrennungsmotordrehmoment und Elektromotordrehmoment während des Explosionshubs jedes Zylinders einheitlich ist.

5. Das System gemäß Anspruch 1, wobei
der ungleichmäßiger-Hubraum-Verbrennungsmotor zwei Arten von Zylindern mit unterschiedlichen Hubräumen aufweist, und
die mindestens zwei Steuermodi aufweisen: einen Modus zum Steuern des Elektromotors, so dass der Elektromotor während Explosionshüben von Zylindern mit großem Hubraum nicht angetrieben wird, und zum Steuern des Elektromotors, so dass eine Leistungsunterstützung mittels Elektromotordrehmoment bei Explosionshüben von Zylindern mit kleinem Hubraum erreicht wird, so dass die Summe aus Verbrennungsmotordrehmoment und Elektromotordrehmoment während des Explosionshubs von jedem Zylinder einheitlich ist.

6. Das System gemäß Anspruch 1, wobei der ungleichmäßiger-Hubraum-Verbrennungsmotor zwei Arten von Zylindern mit unterschiedlichen Hubräumen aufweist, und
die mindestens zwei Steuermodi aufweisen: einen Modus zum Steuern des Elektromotors, so dass ein Rückgewinnungsbremsen während Explosionshüben von Zylindern mit großem Hubraum erreicht wird, und zum Steuern des Elektromotors, so dass der Elektromotor während Explosionshüben von Zylindern mit kleinem Hubraum nicht angetrieben wird, so dass die Summe aus Verbrennungsmotordrehmoment und Elektromotordrehmoment beim Explosionshub jedes Zylinders einheitlich ist.

7. Das System gemäß Anspruch 1, wobei der ungleichmäßiger-Hubraum-Verbrennungsmotor zwei Arten von Zylindern mit unterschiedlichen Hubräumen aufweist, und
die Elektromotorsteuereinheit den Elektromotor wahlweise in mindestens drei verschiedenen Steuermodi steuert, wobei die Steuermodi aufweisen:
einen ersten Modus zum Steuern des Elektromotors, so dass ein Rückgewinnungsbremsen während Explosionshüben von Zylindern mit großem Hubraum erreicht wird, und zum Steuern des Elektromotors, so dass eine Leistungsunterstützung durch Elektromotordrehmoment während Explosionshüben von Zylindern mit kleinem Hubraum erreicht wird,
einen zweiten Modus zum Steuern des Elektromotors, so dass der Elektromotor während der Verbrennungshübe der Zylinder mit großem Hubraum nicht angetrieben wird, und zum Steuern des Elektromotors, so dass eine Leistungsunterstützung durch Elektromotordrehmoment während der Explosionshübe der Zylinder mit kleinem Hubraum erreicht wird, und
einen dritten Modus zum Steuern des Elektromotors, so dass ein Rückgewinnungsbremsen während der Explosionshübe der Zylinder mit großem Hubraum erreicht wird, und zum Steuern des Elektromotors, so dass der Elektromotor während der Explosionshübe der Zylinder mit kleinem Hubraum nicht angetrieben wird.

8. Ein Steuerverfahren für ein System, das einen ungleichmäßiger-Hubraum-Verbrennungsmotor, der eine Mehrzahl von Zylindern aufweist, wobei die Zylinder mindestens zwei Arten von Zylindern mit unterschiedlichen Hubräumen aufweisen, und einen Elektromotor aufweist, der mit einer Antriebswelle des Verbrennungsmotors verbunden ist, wobei das Verfahren aufweist:
(a) Antreiben des ungleichmäßiger-Hubraum-Verbrennungsmotors,
(b) Einstellen des Elektromotordrehmoments basierend auf dem Verbrennungsmotordrehmoment und
(c) Steuern des Elektromotors basierend auf dem eingestellten Elektromotordrehmoment, wobei
Schritt (b) das Kompensieren einer Drehmomentdifferenz aufgrund der Zylinder mit unterschiedlichen Hubräumen aufweist, um den Elektromotor zu steuern, so dass eine Summe aus Verbrennungsmotordrehmoment und Elektromotordrehmoment während eines Explosionshubs jedes Zylinders einheitlich ist, und
wobei der Elektromotor durch eine Elektromotorsteuereinheit gesteuert wird, die mindestens zwei Steuermodi aufweist, und das Elektromotordrehmoment durch die Steuermodi bestimmt wird, und
die jeweiligen Steuermodi konfiguriert sind, um ein unterschiedliches Gesamtantriebsdrehmoment zu haben, durch Anpassen eines Elektromotor-Unterstützungsdrehmoments und eines Elektromotor-Rückgewinnungsdrehmoments gemäß dem Verbrennungsmotordrehmoment, so dass das Antriebsdrehmoment durch Ändern des Steuermodus variiert wird.

9. Das Verfahren gemäß Anspruch 8, wobei der ungleichmäßiger-Hubraum-Verbrennungsmotor zwei Arten von Zylindern mit unterschiedlichen Hubräumen aufweist, und
die mindestens zwei Steuermodi aufweisen: einen Modus zum Steuern des Elektromotors, so dass ein Rückgewinnungsbremsen während Explosionshüben von Zylindern mit großem Hubraum erreicht wird, und zum Steuern des Elektromotors, so dass eine Leistungsunterstützung durch Elektromotordrehmoment bei Explosionshüben von Zylindern mit kleinem Hubraum erreicht wird, so dass die Summe aus Verbrennungsmotordrehmoment und Elektromotordrehmoment während des Explosionshubs jedes Zylinders einheitlich ist.

10. Das Verfahren gemäß Anspruch 8, wobei der ungleichmäßiger-Hubraum-Verbrennungsmotor zwei Arten von Zylindern mit unterschiedlichen Hubräumen aufweist, und
die mindestens zwei Steuermodi aufweisen: einen Modus zum Steuern des Elektromotors, so dass der Elektromotor während Explosionshüben von Zylindern mit großem Hubraum nicht angetrieben wird, und zum Steuern des Elektromotors, so dass eine Leistungsunterstützung durch Elektromotordrehmoment während Explosionshüben von Zylindern mit kleinem Hubraum erreicht wird, so dass die Summe aus Verbrennungsmotordrehmoment und Elektromotordrehmoment während des Explosionshubs jedes Zylinders einheitlich ist.

11. Das Verfahren gemäß Anspruch 8, wobei der ungleichmäßiger-Hubraum-Verbrennungsmotor zwei Arten von Zylindern mit unterschiedlichen Hubräumen aufweist, und
die mindestens zwei Steuermodi aufweisen: einen Modus zum Steuern des Elektromotors, so dass ein Rückgewinnungsbremsen während Explosionshüben von Zylindern mit großem Hubraum erreicht wird, und zum Steuern des Elektromotors, so dass der Elektromotor während Explosionshüben von Zylindern mit kleinem Hubraum nicht angetrieben wird, so dass die Summe aus Verbrennungsmotordrehmoment und Elektromotordrehmoment während des Explosionshubs jedes Zylinders einheitlich ist.

12. Das Verfahren gemäß Anspruch 8, wobei der ungleichmäßiger-Hubraum-Verbrennungsmotor zwei Arten von Zylindern mit unterschiedlichen Hubräumen aufweist, und
Schritt (b) das Steuern des Elektromotors gemäß irgendeinem aufweist, der aus einer Gruppe bestehend aus mindestens drei verschiedenen Steuermodi ausgewählt wird, wobei die Steuermodi aufweisen:
einen ersten Modus zum Steuern des Elektromotors, so dass ein Rückgewinnungsbremsen während Explosionshüben von Zylindern mit großem Hubraum erreicht wird, und zum Steuern des Elektromotors, so dass eine Leistungsunterstützung durch das Elektromotordrehmoment während Explosionshüben von Zylindern mit kleinem Hubraum erreicht wird,
einen zweiten Modus zum Steuern des Elektromotors, so dass der Elektromotor während der Explosionshübe der Zylinder mit großem Hubraum nicht angetrieben wird, und zum Steuern des Elektromotors, so dass eine Leistungsunterstützung durch Elektromotordrehmoment während der Explosionshübe der Zylinder mit kleinem Hubraum erreicht wird, und
einen dritten Modus zum Steuern des Elektromotors, so dass ein Rückgewinnungsbremsen während der Explosionshübe der Zylinder mit großem Hubraum erreicht wird, und zum Steuern des Elektromotors, so dass der Elektromotor während der Explosionshübe der Zylinder mit kleinem Hubraum nicht angetrieben wird.

## Revendications

1. Système de commande de moteur à déplacement non uniforme assisté par un moteur, comprenant :
un moteur à déplacement non uniforme comprenant une pluralité de cylindres, les cylindres comprenant au moins deux sortes de cylindres présentant des déplacements différents ;
un moteur connecté à un arbre d'entraînement du moteur ;
un dispositif de stockage d'énergie destiné à fournir l'énergie électrique au moteur ; et
une unité de commande du moteur destinée à commander le moteur, où
l'unité de commande du moteur commande le moteur pour compenser une différence de couple due à des déplacements différents des cylindres, de telle sorte que la somme du couple moteur et du couple moteur au cours de la course de pistons de chaque cylindre soit uniforme, et
l'unité de commande du moteur présente au moins deux modes de commande, les modes de commande respectifs sont configurés afin de présenter un couple moteur total différent en réglant un couple d'assistance du moteur et un couple régénératif du moteur selon le couple moteur, de telle sorte que le couple moteur varie en changeant de mode de commande.

2. Système selon la revendication 1, où le moteur à déplacement non uniforme comprend deux ensembles de cylindres, chaque ensemble de cylindres comprenant deux cylindres présentant le même déplacement.

3. Système selon la revendication 1 ou 2, où le moteur à déplacement non uniforme comprend un premier et un quatrième cylindre présentant un déplacement plus élevé que celui d'un deuxième et d'un troisième cylindre, et chaque ensemble des cylindres exécute de manière alternée une course de pistons.

4. Système selon la revendication 1, où le moteur à déplacement non uniforme comprend deux sortes de cylindres présentant des déplacements différents, et
les deux modes de commande au moins comprennent un mode destiné à commander le moteur de telle sorte qu'un freinage régénératif soit réalisé au cours des courses de pistons des cylindres à déplacement élevé, et à commander le moteur de telle sorte que l'assistance de puissance soit réalisée par le couple moteur au cours des courses de pistons des cylindres à déplacement faible, afin que la somme du couple moteur et du couple moteur au cours de la course de pistons de chaque cylindre, soit uniforme.

5. Système selon la revendication 1, où
le moteur à déplacement non uniforme comprend deux sortes des cylindres présentant des déplacements différents, et
les deux modes de commande au moins comprennent un mode destiné à commander le moteur de telle sorte que le moteur ne soit pas entraîné au cours des courses de pistons des cylindres à déplacement élevé, et à commander le moteur de telle sorte que l'assistance de puissance soit réalisée par le couple moteur au cours des courses de pistons des cylindres à déplacement faible, afin que la somme du couple moteur et du couple moteur au cours de la course de pistons de chaque cylindre, soit uniforme.

6. Système selon la revendication 1, où le moteur à déplacement non uniforme comprend deux sortes de cylindres présentant des déplacements différents, et
les deux modes de commande au moins comprennent un mode destiné à commander le moteur de telle sorte qu'un freinage régénératif soit réalisé au cours des courses de pistons des cylindres à déplacement élevé, et à commander le moteur de telle sorte que le moteur ne soit pas entraîné au cours des courses de pistons des cylindres à déplacement faible, afin que la somme du couple moteur et du couple moteur au cours de la course de pistons de chaque cylindre, soit uniforme.

7. Système selon la revendication 1, où le moteur à déplacement non uniforme comprend deux sortes de cylindres présentant des déplacements différents, et
l'unité de commande du moteur commande le moteur sélectivement dans trois modes de commande différents au moins, les modes de commande comprenant :
un premier mode destiné à commander le moteur de telle sorte qu'un freinage régénératif soit réalisé au cours des courses de pistons des cylindres à déplacement élevé, et à commander le moteur de telle sorte que l'assistance de puissance soit réalisée par le couple moteur au cours des courses de pistons des cylindres à déplacement faible ;
un deuxième mode destiné à commander le moteur de telle sorte que le moteur ne soit pas entraîné au cours des courses de pistons des cylindres à déplacement élevé, et à commander le moteur de telle sorte que l'assistance de puissance soit réalisée par le couple moteur au cours des courses de pistons des cylindres à déplacement faible ; et
un troisième mode destiné à commander le moteur de telle sorte qu'un freinage régénératif soit réalisé au cours des courses de pistons des cylindres à déplacement élevé, et à commander le moteur de telle sorte que le moteur ne soit pas entraîné au cours des courses de pistons des cylindres à déplacement faible.

8. Procédé de commande d'un système comprenant un moteur à déplacement non uniforme comprenant une pluralité de cylindres, les cylindres comprenant au moins deux sortes de cylindres présentant des déplacements différents, et un moteur connecté à un arbre d'entraînement du moteur, le procédé comprenant les étapes suivantes :
(a) entraîner le moteur à déplacement non uniforme ;
(b) régler le couple moteur sur la base du couple moteur ; et
(c) commander le moteur sur la base du couple moteur réglé, où l'étape (b) comprend une étape consistant à compenser la différence de couple due aux cylindres présentant des déplacements différents afin de commander le moteur de telle sorte que la somme du couple moteur et du couple moteur au cours de la course de pistons de chaque cylindre, soit uniforme, et
où le moteur est commandé par une unité de commande de moteur qui présente au moins deux modes de commande, et le couple moteur est déterminé par les modes de commande ; et
les modes de commande respectifs sont configurés afin de présenter un couple moteur total différent en réglant un couple d'assistance du moteur et un couple régénératif du moteur selon le couple moteur, de telle sorte que le couple moteur varie en changeant de mode de commande.

9. Procédé selon la revendication 8, où le moteur à déplacement non uniforme comprend deux sortes de cylindres présentant des déplacements différents, et
les deux modes de commande au moins comprennent un mode destiné à commander le moteur de telle sorte qu'un freinage régénératif soit réalisé au cours des courses de pistons des cylindres à déplacement élevé, et à commander le moteur de telle sorte que l'assistance de puissance soit réalisée par le couple moteur au cours des courses de pistons des cylindres à déplacement faible, afin que la somme du couple moteur et du couple moteur au cours de la course de pistons de chaque cylindre, soit uniforme.

10. Procédé selon la revendication 8, où le moteur à déplacement non uniforme comprend deux sortes de cylindres présentant des déplacements différents, et
les deux modes de commande au moins comprennent un mode destiné à commander le moteur de telle sorte que le moteur ne soit pas entraîné au cours des courses de pistons des cylindres à déplacement élevé, et à commander le moteur de telle sorte que l'assistance de puissance soit réalisée par le couple moteur au cours des courses de pistons des cylindres à déplacement faible, afin que la somme du couple moteur et du couple moteur au cours de la course de pistons de chaque cylindre, soit uniforme.

11. Procédé selon la revendication 8, où le moteur à déplacement non uniforme comprend deux sortes de cylindres présentant des déplacements différents, et
les deux modes de commande au moins comprennent un mode destiné à commander le moteur de telle sorte qu'un freinage régénératif soit réalisé au cours des courses de pistons des cylindres à déplacement élevé, et à commander le moteur de telle sorte que le moteur ne soit pas entraîné au cours des courses de pistons des cylindres à déplacement faible, afin que la somme du couple moteur et du couple moteur au cours de la course de pistons de chaque cylindre, soit uniforme.

12. Procédé selon la revendication 8, où le moteur à déplacement non uniforme comprend deux sortes de cylindres présentant des déplacements différents, et
l'étape (b) comprend une étape consistant à commander le moteur selon l'un quelconque des modes sélectionnés dans un groupe se composant de trois modes de contrôle différents au moins, les modes de commande comprenant :
un premier mode destiné à commander le moteur de telle sorte qu'un freinage régénératif soit réalisé au cours des courses de pistons des cylindres à déplacement élevé, et à commander le moteur de telle sorte que l'assistance de puissance soit réalisée par le couple moteur au cours des courses de pistons des cylindres à déplacement faible ;
un deuxième mode destiné à commander le moteur de telle sorte que le moteur ne soit pas entraîné au cours des courses de pistons des cylindres à déplacement élevé, et à commander le moteur de telle sorte que l'assistance de puissance soit réalisée par le couple moteur au cours des courses de pistons des cylindres à déplacement faible ; et
un troisième mode destiné à commander le moteur de telle sorte qu'un freinage régénératif soit réalisé au cours des courses de pistons des cylindres à déplacement élevé, et à commander le moteur de telle sorte que le moteur ne soit pas entraîné au cours des courses de pistons des cylindres à déplacement faible.
